# EUROPÄISCHE PATENTSCHRIFT

(11) **EP 0 718 314 B1**
(45) Veröffentlichungstag und Bekanntmachung des Hinweises auf die Patenterteilung: **15.07.1998**
(21) Anmeldenummer: 95120108.6
(22) Anmeldetag: 19.12.1995
(51) Int. Cl.: C08F 2/24, C09D 157/00

(54) **Verfahren zur Herstellung von Kunststoffdispersionen, seine Produkte und deren Verwendung**
Process for preparing dispersions of plastics, its products and their use
Procédé de préparation de dispersions de matières plastiques, ses produits et leurs utilisations

(30) Priorität: 24.12.1994 DE 4446539
(43) Veröffentlichungstag der Anmeldung: 26.06.1996
(73) Patentinhaber: Clariant GmbH, 65929 Frankfurt am Main (DE)
(72) Erfinder: Geissler, Ulrich, Dr., D-65239 Hochheim (DE); Rinno, Helmut, Dr., D-65719 Lorsbach (DE); Thevissen, Heinz-Josef, Dr., D-65527 Niedernhausen (DE)

(56) Entgegenhaltungen:
- EP-A- 0 062 106
- EP-A- 0 538 571
- EP-A- 0 644 205
- GB-A- 2 049 712
- CHEMICAL ABSTRACTS, vol. 112, no. 4, 22.Januar 1990 Columbus, Ohio, US; abstract no. 21424, 'EMULSION POLYMERIZATION AND COPOLYMERIZATION OF VINYL AND ACRYLATE MONOMERS' Seite 10; & CS-A-253 230 (SNUPAREK J.)

## Beschreibung

Die vorliegende Erfindung betrifft die Herstellung von Schutzkolloid-stabilisierten wäßrigen Styrol-/(Meth)Acrylat-Dispersionen sowie deren Verwendung.

Verfahren zur Herstellung von Emulgator-stabilisierten (Meth)Acrylat- und Styrol-/(Meth)Acrylat- Dispersionen sind bekannt (EP-A 0 226 527, US-A 2 795 564). Ebenfalls bekannt sind Verfahren zur Herstellung von Schutzkolloid-stabilisierten, wäßrigen Kunststoffdispersionen (J. Appl. Poly. Sci., Vol. 40, 333-343 (1990). Schwierigkeiten gibt es jedoch bei der Herstellung von Schutzkolloid-stabilisierten (Meth)Acrylat- und Styrol-/(Meth)Acrylat-Dispersionen, da die Viskosität während der Polymerisation von (Meth)Acrylaten in Gegenwart von Schutzkolloiden extrem ansteigt (US-A 4 670 505)

In US-A 4 670 505 wird ein Verfahren zur Herstellung von (Meth)Acrylat-Kunststoffdispersionen beschrieben, nach dem zusätzlich zum Schutzkolloid bis zu 5 Gew.-%, bezogen auf die Monomeren, einer wasserlöslichen Aminoalkoholverbindung eingesetzt wird. Diese wirkt als Radikalfänger bei der Pfropfung der Monomeren auf das Schutzkolloid und somit als Viskositätsregler.

In GB-A 1 278 813 wird das Viskositätsproblem durch Zusatz von bis zu 10 Gew.-%, bezogen auf die Monomeren, einer stabilisierenden Verbindung wie Allylalkohol oder gesättigten aliphatischen Alkoholen gelöst.

Die EP-B 0 062 106 betrifft ein Verfahren zur Herstellung feinteiliger, durch Polyvinylalkohol stabilisierter (Meth)Acrylat- und Styrol-/(Meth)Acrylat-Dispersionen dadurch gekennzeichnet, daß die Hauptmenge der Monomeren in Form einer Voremulsion während der Reaktion dosiert wird.

In EP-B 0 538 571 wird ein Verfahren zur Herstellung von Schutzkolloid-stabilisierten, Emulgator-freien wäßrigen Kunststoffdispersionen auf Basis von mehr als 50 Gew.-% Styrol und/oder Alkyl(meth)acrylat beschrieben, wobei die Polymerisation in Monomer-Zulauffahrweise durchgeführt und die gesamte Polyvinylalkoholmenge in die Vorlage gegeben wird. Außerdem wird in allen Beispielen Acrylamid eingesetzt. Acrylamid ist in Tierversuchen als krebserzeugend ausgewiesen (MAK-Liste A2 K, TLV-Liste A2) und sollte möglichst nicht mehr zur Dispersionsherstellung verwendet werden.

Die Aufgabe der Erfindung besteht darin, ein technisch einfach durchzuführendes Verfahren zur Herstellung von Schutzkolloid-stabilisierten wäßrigen Kunststoffdispersionen bereitzustellen, bei dem die Viskositäten der Dispersionen während des Polymerisationsverfahrens in einem Bereich liegen, der eine gute Rühr- und Pumpbarkeit gewährleistet.

Gegenstand der Erfindung ist ein Verfahren zur Herstellung von Schutzkolloid-stabilisierten wäßrigen Kunststoffdispersionen auf Basis von Copolymerisaten aus
a) einem oder mehreren Estern der Acrylsäure und/oder Methacrylsäure mit einem 1 bis 22 Kohlenstoffatome aufweisenden Alkohol und gegebenenfalls
b) weiteren mit den vorgenannten Komponenten copolymerisierbaren Monomeren,
dadurch gekennzeichnet, daß mindestens 50 Gew.-% der Gesamtmenge der Monomeren und des Schutzkolloids und bis zu 50 Gew.-% der Gesamtmenge des Initiators in Form einer wäßrigen Emulsion vorgelegt werden und mindestens 50 Gew.-% des Initiators und gegebenenfalls die Restmenge der Monomeren und des Schutzkolloids bei einer Reaktionstemperatur von 30 bis 100 °C zugesetzt werden.

Die Polymeren in der Schutzkolloid-stabilisierten wäßrigen Kunststoffdispersion besitzen Mindesffilmbildungstemperatur (MFT) von bis zu 60 °C, insbesondere von 0 °C bis 40 °C. Bei einer MFT der Polymeren unterhalb von 0 °C liegen die Glasübergangstemperaturen dieser Polymeren vorzugsweise zwischen -50 °C und 0 °C, insbesondere zwischen -30 °C und 0 °C.

Die MFT wird eingestellt durch geeignete Kombination von "weichmachenden" Monomeren (Acrylsäureester oder höhere Methacrylsäureester), und "hartmachenden" Monomeren (Methacrylsäureester und Styrol).

Als Monomere der Gruppe a) werden vorzugsweise Ester der Acrylsäure oder Methacrylsäure mit einem 1 bis 12 Kohlenstoffatome aufweisenden Alkohol eingesetzt. Beispiele für Monomere der Gruppe a) sind Methylacrylat, Ethylacrylat, n-Propylacrylat, n-Butylacrylat, i-Butylacrylat, t-Butylacrylat, n-Hexylacrylat, n-Octylacrylat, 2-Ethylhexylacrylat, Laurylacrylat, Stearylacrylat, Methylmethacrylat, Ethylmethacrylat, n-Propylmethacrylat, n-Butylmethacrylat, i-Butylmethacrylat, n-Octylmethacrylat, 2-Ethylhexylmethacrylat, Decylmethacrylat, i-Decylmethacrylat, Laurylmethacrylat, Stearylmethacrylat, Behenylmethacrylat.

Als Monomere der Gruppe b) kommen unter anderem vorzugsweise Vinylaromaten, insbesondere Styrol, und Vinylester in Frage, insbesondere Vinylester von linearen oder verzweigten Monocarbonsäuren mit 2 bis 12 Kohlenstoffatomen. Beispiele geeigneter Vinylester sind Vinylacetat, Vinylpropionat, Vinylbutyrat, Vinylisobutyrat, Vinylpivalat, Vinyl-2-ethylhexanoat, Vinylester von ®Versatic-Säure 9, 10 oder 11 (α,α-Dialkyl-verzweigte Monocarbonsäuren, Shell Chemie). Die Auswahl der Monomeren ist so zu treffen, daß eine hinreichende Copolymerisierbarkeit gewährleistet ist.

Der Anteil an Styrol und (Meth)Acrylatmonomeren zusammen oder an (Meth)Acrylatmonomeren im Falle von Styrol-freien Systemen beträgt vorzugsweise mehr als 50 Gew.%, insbesondere mehr als 70 Gew.-%, bezogen auf den Gesamtmonomerengehalt.

Außerdem können Verbindungen mit Acetoacetoxygruppen wie beispielsweise Acetoacetoxyethylmethacrylat oder ω-Acrylamido-ω,ω-dimethylalkansulfonsäuren, beispielsweise 2-Acrylamido-2,2-dimethylethansufonsäure oder deren Alkali- oder Ammoniumsalz einpolymerisiert werden.

Weiterhin können monoolefinisch ungesättigte Monocarbonsäuren und Dicarbonsäuren, beispielsweise Acrylsäure, Methacrylsäure, Maleinsäure, Fumarsäure und Itaconsäure, sowie Mono- und Diester der Dicarbonsäuren, beispielsweise Maleinsäuremonomethylester und Maleinsäure-2-ethylhexylester eingesetzt werden.

Geeignete Copolymerzusammensetzungen bestehen beispielsweise aus Methylmethacrylat/Butylacrylat/Methacrylsäure (25:74:1), Methylmethacrylat/Butylacrylat/Acetoacetoxyethylmethacrylat (34:64:2), Methylmethacrylat/2-Ethylhexylacrylat/Methacrylsäure (59:39:2), Methylmethacrylat/ Butylacrylat/Laurylmethacrylat/Methacrylsäure (35:58:5:2), Styrol/Butylacrylat/Acrylsäure (34:64:2).

Als Schutzkolloide werden vorzugsweise veretherte Cellulosederivate, beispielsweise Hydroxyethylcellulose, Methylcellulose, Carboxymethylcellulose, Polyvinylpyrrolidon, Polycarbonsäuren sowie insbesondere Polyvinylalkohol eingesetzt.

Vorzugsweise wird Polyvinylalkohol in Mengen von 4 bis 15 Gew.-%, insbesondere 5 bis 10 Gew.-%, bezogen auf die Monomeren, eingesetzt.

Der Polymerisationsgrad des Polyvinylalkohols liegt vorzugsweise bei 200 bis 3500, insbesondere bei 500 bis 3000. Besonders bevorzugt ist eine Mischung aus Polyvinylalkoholen mit unterschiedlichem mittleren Molekulargewicht. Der Hydrolysegrad des Polyvinylalkohols beträgt vorzugsweise 80 bis 98 Mol-%, insbesondere 88 Mol-%.

Nach dem erfindungsgemäßen Verfahren werden vorzugsweise mindestens 80 Gew.-%, insbesondere mindestens 90 Gew.-%, der Gesamtmenge der Monomeren und des Schutzkolloids vorgelegt und vorzugsweise mindestens 80 Gew.-%, insbesondere mindestens 90 Gew.-%, des Initiators bei einer Reaktionstemperatur von 40 bis 90 °C zugesetzt.

Gemäß einer weiteren Ausführungsform wird die Gesamtmenge der Monomeren und des Schutzkolloids vorgelegt und die Gesamtmenge des Initiators bei einer Reaktionstemperatur von 40 bis 90 °C, vorzugsweise 80 bis 90 °C, zudosiert.

Gemäß einer weiteren Ausführungsform wird die Gesamtmenge der Monomeren und des Schutzkolloids zusammen mit 5 bis 20 Gew.-%, vorzugsweise 5 bis 10 Gew.-%, der Gesamtmenge des Initiators vorgelegt und die Polymerisation bei einer Temperatur von 50 °C bis 60 °C gestartet und anschließend bei einer Temperatur von 80 bis 90 °C die restliche Initiatormenge so zudosiert, daß eine Temperatur von 80 °C bis 90 °C bis zum Ende der Polymerisation aufrechterhalten wird.

Es können wasserlösliche oder im wesentlichen wasserunlösliche Initiatoren eingesetzt werden. Beispiele für wasserlösliche Initiatoren sind Natrium-, Kalium- und Ammoniumperoxodisulfat und wasserlösliche Azoinitiatoren, wie beispielsweise 2,2'-Azobis(2-amidinopropan)dihydrochlorid. Geeignete Monomer-lösliche Initiatoren sind organische Hydroperoxide, beispielsweise tert.-Butylhydroperoxid, Cumolhydroperoxid, organische Peroxide beispielsweise Dibenzoylperoxid, Dilaurylperoxid und monomerlösliche Azoverbindungen wie Azobisisobutyronitril.

Die Initiatoren können bevorzugt auch in Verbindung mit reduzierend wirkenden Substanzen, wie beispielsweise Natriumbisulfit, Natriumhydroxymethansulfinat eingesetzt werden.

Die Initiatoren werden vorzugsweise in einer Menge von jeweils 0,05 bis 1,0 Gew.-%, bezogen auf die Gesamtmonomermenge eingesetzt.

Zusätzlich können noch nichtionische oder ionische Emulgatoren, gegebenenfalls Kombinationen von beiden Typen, Regler und Entschäumer zugesetzt werden.

Als nichtionische Emulgatoren verwendet man beispielsweise Alkylpolyglykolether wie die Ethoxylierungsprodukte von Lauryl-, Oleyl-, Stearyl- oder Kokosfettalkohol, Alkylphenolpolyglykolether wie die Ethoxylierungsprodukte von Octyl- oder Nonyl-phenol, Diisopropyl-phenol, Triisopropylphenol oder von Di- oder Tri-Tert.-butyl-phenol; oder Ethoxylierungsprodukte von Propylenoxid.

Als ionische Emulgatoren kommen in erster Linie anionische Emulgatoren in Frage. Es kann sich dabei um die Alkali- oder Ammonium-Salze von Alkyl-, Aryl- oder Alkylarylsulfonsäuren, sowie die entsprechenden Sulfate, Phosphate oder Phosphonate handeln, wobei sich auch Oligo- oder Polyethylenoxid-Einheiten zwischen dem Kohlenwasserstoffrest und der anionischen Gruppe befinden können. Typische Beispiele sind Natriumlaurylsulfat, Natriumoctylphenolglykolethersulfate, Natriumdodecylbenzolsulfonat, Natriumlauryldiglykolsulfat, Ammonium-tri-tert.-butylphenolpentaglykolsulfat oder -octaglykolsulfat.

Die Emulgatoren können in einer Menge von 0,1 bis 5 Gew.% bezogen auf die Gesamtmonomermenge eingesetzt werden.

Der pH-Wert der Reaktionsmischungen sollte zwischen 4 und 7, bevorzugt zwischen 3 und 6 liegen. Die Einstellung erfolgt beispielsweise mit Natriumhydrogencarbonat.

Die bei der Polymerisation entstehende Reaktionswärme kann durch indirekte Kühlung der Reaktionsmischung über die Kesselwand beziehungsweise durch innen oder außen liegende Wärmeaustauscher, aber auch durch Verdampfungskühlung abgeführt werden. Bei der Verdampfungskühlung wird ein Wasser/Monomer-Gemisch gegebenenfalls unter reduziertem Druck abdestilliert, kondensiert und in den Reaktionsansatz zurückgeführt.

Die erfindungsgemäßen Dispersionen besitzen vorzugsweise Feststoffgehalte von 30 bis 70 Gew.-%, insbesondere 40 bis 60 Gew.-%.

Die Viskositäten von ca. 50%igen Dispersionen liegen vorzugsweise bei 500 bis 3000 mPa·s, insbesondere 500 bis 2000 mPa·s (Schergefälle D = 386,6 s⁻¹). Die mittleren Partikeldurchmesser d_{w} solcher Dispersionen liegen vorzugsweise im Bereich von 500 bis 2500 nm, insbesondere von 1000 bis 2000 nm, mit d_{w}/dₙ zwischen 3 und 20, insbesondere zwischen 4 und 15.

Gegenüber Dosierverfahren, wie Monoemulsionsdosierung (EP-B 0 062 106) oder Monomerdosierung (EP-B 0 538 571) führt das erfindungsgemäße Batchverfahren zu höheren Molekulargewichten, was sich in einer höheren Elastizität und Klebfreiheit der Dispersionsfilme niederschlägt. Außerdem sind die Dispersionsfilme sehr stabil gegen Verseifung.

Gegenstand der vorliegenden Erfindung ist auch die Verwendung der Schutzkolloid-stabilisierten Dispersionen.

Die erfindungsgemäß hergestellten Dispersionen finden vorzugsweise als Bindemittel in umweltfreundlichen Holzschutzfarben Anwendung.

Aus den erfindungsgemäß hergestellten Dispersionen lassen sich durch Sprühtrocknung sehr gut redispergierbare Kunststoffpulver herstellen. Die erzielte Partikelgröße gestattet ein einwandfreies Versprühen der Dispersionen. Derartige Kunststoffpulver können in hydraulisch abbindenden Baustoffen und in Pulverfarben eingesetzt werden.

Die folgenden Beispiele dienen zur näheren Erläuterung der Erfindung. Die angegebenen Teile und Prozente beziehen sich auf das Gewicht, soweit nicht anders vermerkt.

### Beispiel 1

In einem Reaktionsgefäß, das sich in einem Heizbad befindet und mit Rührer, Rückflußkühler, Tropftrichter, Thermometer und Stickstoffeinleitung ausgestattet ist, werden

| | |
|---|---|
| 881 | Teile vollentsalztes Wasser |

vorgelegt.

Unter Rühren werden

| | |
|---|---|
| 49,0 Teile | Polyvinylalkohol (Viskosität einer 4%igen wäßrigen Lösung bei 20 °C: 8 mPa·s, Verseifungsgrad: 88 Mol-%, Polymerisationsgrad: 1400), |
| 39,2 Teile | Polyvinylalkohol (Viskosität einer 4%igen wäßrigen Lösung bei 20 °C: 18 mPa·s, Verseifungsgrad: 88 Mol-%, Polymerisationsgrad: 2700), |
| 1,76 Teile | Natriumhydrogencarbonat, |
| 3,5 Teile | (C₁₂/C₁₄)-Alkoholethersulfat-Natriumsalz (28 %ig) (®Genapol ZRO, Hoechst) und |
| 0,98 Teile | eines Entschäumers auf Basis einer Kombination von flüssigen Kohlenwasserstoffen, hydrophober Kieselsäure, synthetischen Copolymeren und nichtionogenen Emulgatoren (®Agitan 281, Münzing Chemie) |

zugegeben.

Unter Stickstoffeinleitung wird auf 80 °C geheizt und 3 Stunden bei dieser Temperatur gerührt.

Anschließend wird wieder abgekühlt und

| | |
|---|---|
| 637 Teile | n-Butylacrylat, |
| 343 Teile | Methylmethacrylat, |
| 19,6 Teile | Acetoacetoxyethylmethacrylat, |
| 19,6 Teile | Methacrylsäure und |
| 0,92 Teile | n-Dodecanthiol |

hinzugefügt.

Es wird wieder auf 80 °C erwärmt und parallel die folgenden Initiatorlösungen innerhalb von 3 Stunden zudosiert:

| | |
|---|---|
| 2,06 Teile | t-Butylhydroperoxid (70 %ig) (®Trigonox A-W70, Akzo-Chemie), in |
| 88 Teilen | vollentsalztem Wasser, |
| 1,44 Teile | Natriumhydroxymethansulfinat (®Rongalit C, BASF) in |
| 88 Teilen | vollentsalztem Wasser. |

Während dieser Zeit sollte die Innentemperatur von 80°C aufrechterhalten werden, was durch Kühlung in der Startphase und Heizung in der Folgephase erreicht wird. Nach Dosierende läßt man noch 1 Stunde bei 80 °C nachreagieren und kühlt dann auf Raumtemperatur ab.

Es wird eine einwandfreie, nahezu stippenfreie Dispersion erhalten.

| Physikalische Daten der Dispersion: | |
|---|---|
| Feststoffgehalt | 50,6 % |
| Restmonomerengehalt | <0,01 % Methylmethacrylat |
| | 0,01 % Butylacrylat |
| Viskosität (386,6 s⁻¹) | 1790 mPa·s |
| Mittlerer Partikeldurchmesser d_{w} | 1155 nm |
| Partikelgrößenverteilung d_{w}/dₙ (Aerosolspektroskopie) | 4,69 |

Als Vergleich wurden die Beispiele 6, 9, 11 und 19 aus EP-B 0 538 571 nachgearbeitet. In den beiden ersten Fällen werden stippige Dispersionen erhalten, die Dispersion nach Beispiel 11 ist dilatant, nur analog Beispiel 19 kann eine brauchbare Dispersion erhalten werden. Dies ist aber zwangsläufig mit der Verwendung des toxischen Acrylamids verknüpft. Eine Reduzierung des Acrylamid-Gehalts oder ein Austausch von Acrylamid durch Methacrylsäure beziehungsweise Acrylsäure führt zu unbrauchbaren Dispersionen.

Zu den Dispersionen werden jeweils 2,5 % bezogen auf Feststoff, Polyvinylalkohol (Viskosität einer 4%igen wäßrigen Lösung bei 20 °C: 4 mPa·s, Verseifungsgrad: 88 Mol-%, Polymerisationsgrad: 630) als 25 %ige Lösung zugesetzt.

Die Dispersionen werden mit entionisiertem Wasser auf einen Feststoffgehalt von 40 % verdünnt und unter Zugabe eines Antibackmittels (Verwachsung von weißem Talk mit Dolomit) sprühgetrocknet (Sprühtrockner der Fa. Niro, Eingangstemperatur: 130 °C, Ausgangstemperatur: 65 °C, Durchsatz: 1 kg/Stunde). Der Antibackmittelgehalt beträgt 12 %.

Es wurden Lagerstabilität, Redispergierverhalten und Zementverträglichkeit der Dispersionspulver bestimmt.

### 1. Lagerstabilität

Das Pulver wird in einen Zylinder von 3 cm Durchmesser und 4 cm Höhe eingefüllt und mit einem Gewicht von 1400 g 24 Stunden bei 50 °C gelagert. Nach dem Abkühlen wird das Zusammenbacken des Pulvers beurteilt ( 1 = wenig zusammengebacken, leicht zu zerkleinern, 6 = stark zusammengebacken, nicht zerkleinerbar).

### 2. Redispergierbarkeit (Röhrenabsetzverhalten)

25 Teile Dispersionspulver werden in 25 Teile entionisiertes Wasser mit einem Glasstab eingerührt und dann 10 Min bei 2000 Upm homogenisiert. 2 Teile dieser Redispersion werden mit 198 Teilen entionisiertem Wasser verdünnt, so daß eine 0,5 %ige Redispersion entsteht. Diese wird in ein senkrecht gestelltes Rohr von 165 cm Höhe und 8 mm Durchmesser eingefüllt, das über einen Schliff mit einem Endstück von 10 cm Länge und 4 mm Durchmesser verbunden ist. Nach 1, 2, 6, 24 und 48 Stunden wird die abgesetzte Menge Dispersionspulver in mm Höhe gemessen. Eine geringe Absetzneigung ist ein Maß für eine gute Redispergierbarkeit.

### 3. Zementverträglichkeit

500 Teile Portlandzement PZ 35 werden mit 1500 Teilen Normsand und 50 Teilen Dispersionspulver trocken gemischt und anschließend mit 250 Teilen Wasser angerührt. Unmittelbar nach Fertigstellung des Dispersionspulver-haltigen Zementmörtels sowie 15 min nach Fertigstellung, wird nach DIN 18 555 Teil 2 sein Ausbreitmaß bestimmt. Die Zementverträglichkeit des Dispersionspulvers ist um so besser, je größer das Ausbreitmaß des Zementmörtels ist, und je langsamer dieses als Funktion der Zeit abfällt.

Die Ergebnisse sind aus der folgenden Tabelle ersichtlich:

**Tabelle 1:**

| Anwendungstechnische Prüfung | | |
|---|---|---|
| | Beispiel 1 | Beispiel 19 aus EP-B 0 538 571 (zum Vergleich) |
| Lagerstabilität | 2 | 5 |
| Röhrenabsetzverhalten (mm) 1/2/6/24/48 Std. | 0/1/2/7/8 | 3/8/19/34/39 |
| Ausbreitmaß (sofort/15 Min.) | 16,5/15,6 | 13/11,5 |

Wie aus der Tabelle ersichtlich, zeigt das erfindungsgemäße Dispersionspulver deutliche Vorteile bezüglich Lagerstabilität, Redispergierbarkeit und Zementverträglichkeit.

Zusätzlich wurden Dispersionen analog den Beispielen 5 und 8 aus EP-B 0 062 106 hergestellt.

Die folgende Tabelle 2 zeigt eine Zusammenstellung der mittleren Partikeldurchmesser sowie der Partikelgrößenverteilungen dieser Dispersionen im Vergleich zur erfindungsgemäßen Dispersion aus Beispiel 1:

**Tabelle 2:**

| Partikelgröße | | | |
|---|---|---|---|
| | Beispiel 1 | Beispiel 5 aus EP-B 0 062 106 (zum Vergleich) | Beispiel 8 aus EP-B 0 062 106 (zum Vergleich) |
| Mittlerer Partikeldurchmesser d_{w} (nm) | 1155 | 364 | 475 |
| Partikelgrößenverteilung d_{w}/dₙ | 4,69 | 1,65 | 2,51 |

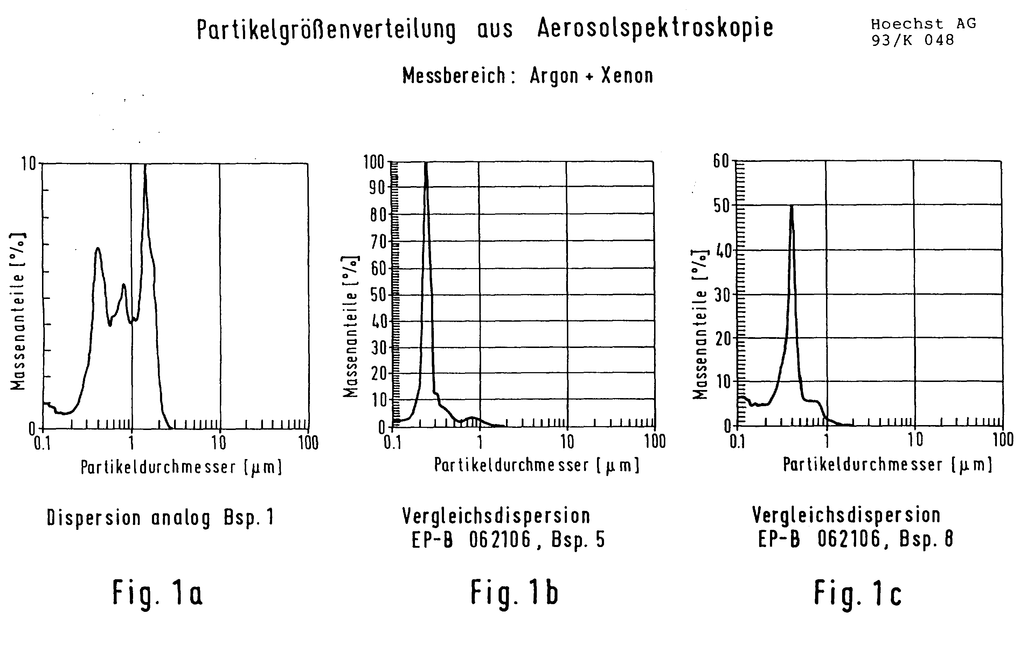

Die unterschiedlichen Partikelgrößenverteilungen sind zusätzlich in Fig 1a, 1b und 2c graphisch dargestellt.

Der mittlere Partikeldurchmesser der erfindungsgemäßen Dispersion ist wesentlich größer und die Partikelgrößenverteilung deutlich breiter.

Die Versprühung der Vergleichsdispersion analog Beispiel 5 aus EP-B 0 062 106 lieferte ein grobes Pulver, das bereits bei Raumtemperatur-Lagerung zusammenklumpte und in Wasser sehr schlecht redispergierbar war.

**Tabelle 3:**

| Anwendungstechnische Prüfung | |
|---|---|
| | Vergleichsbeispiel 5 EP-B 0 062 106 |
| Lagerstabilität | 5 |
| Röhrenabsetzverhalten (mm) 1/2/6/24/48 Stunden | 6/10/21/38/40 |

Die deutlich bessere Lagerstabilität des erfindungsgemäßen Pulvers ist um so überraschender, als das Polymere aus Beispiel 1 (Monomerzusammensetzung Methylmethacrylat/Butylacrylat (35:65)) einen höheren Anteil an weichmachendem Monomeren enthält als das Polymere analog Vergleichsbeispiel 5 aus EP-B 0 062 106 (Monomerzusammensetzung Styrol/Butylacrylat (40:60)).

Die Vergleichsdispersion analog Beispiel 8 führte zu einem stark klebrigen Produkt, das sich im Sprühturm und in den Rohrleitungen festsetzte.

### Beispiel 2

Es wurde eine Dispersion analog Beispiel 1 unter Einsatz der folgenden Rohstoffe hergestellt:

| | |
|---|---|
| 881 Teile | vollentsalztes Wasser, |
| 36,5 Teile | Polyvinylalkohol (Viskosität einer 4%igen wäßrigen Lösung bei 20 °C: 4 mPa·s, Verseifungsgrad: 88 Mol-%, Polymerisationsgrad: 630), |
| 30,0 Teile | Polyvinylalkohol (Viskosität einer 4%igen wäßrigen Lösung bei 20 °C: 18 mPa·s, Verseifungsgrad: 88 Mol-%, Polymerisationsgrad: 2700), |
| 1,76 Teile | Natriumhydrogencarbonat, |
| 3,5 Teile | (C₁₂/C₁₄)-Alkoholethersulfat-Natriumsalz (28 %ig) (Genapol ZRO) und |
| 0,98 Teile | eines Entschäumers auf Basis einer Kombination von flüssigen Kohlenwasserstoffen, hydrophober Kieselsäure, synthetischen Copolymeren und nichtionogenen Emulgatoren (Agitan 281), |
| 637 Teile | n-Butylacrylat, |
| 49 Teile | Methylmethacrylat, |
| 294 Teile | Styrol, |
| 19,6 Teile | Acetoacetoxyethylmethacrylat, |
| 19,6 Teile | Methacrylsäure und |
| 0,92 Teile | n-Dodecanthiol. |

| Initiatorlösungen: | |
|---|---|
| 2,80 Teile | t-Butylhydroperoxid (70 %ig) (Trigonox A-W70) in |
| 88 Teilen | vollentsalztem Wasser und |
| 1,96 Teile | Natriumhydroxymethansulfinat (Rongalit C) in |
| 88 Teilen | vollentsalztem Wasser |

| Physikalische Daten der Dispersion: | |
|---|---|
| Feststoffgehalt | 49,1 % |
| Viskosität (386,6 s⁻¹) | 2890 mPa·s |
| Mittlerer Partikeldurchmesser d_{w} | 1646 nm |
| Partikelgrößenverteilung d_{w}/dₙ (Aerosolspektroskopie) | 15,76 |

Anwendungstechnische Prüfergebnisse analog Beispiel 1:

| | |
|---|---|
| Lagerstabilität | 2- |
| Röhrenabsetzverhalten (mm) | 0/1/4/8/11 |
| 1/2/6/24/48 Stunden Ausbreitmaß (sofort/ 15 min.) | 17,1/14,6 |

### Beispiel 3

Es wurde eine Dispersion analog Beispiel 1 hergestellt, wobei die Zusammensetzung wie folgt variiert wurde (Monomerzusammensetzung: n-Butylacrylat:Methylmethacrylat (75:25)):

| | |
|---|---|
| 429 Teile | vollentsalztes Wasser, |
| 16,8 Teile | Polyvinylalkohol (Viskosität einer 4%igen wäßrigen Lösung bei 20 °C: 4 mPa·s, Verseifungsgrad: 88 Mol-%, Polymerisationsgrad: 630), |
| 13,9 Teile | Polyvinylalkohol (Viskosität einer 4%igen wäßrigen Lösung bei 20 °C: 18 mPa·s, Verseifungsgrad: 88 Mol-%, Polymerisationsgrad: 2700), |
| 0,82 Teile | Natriumhydrogencarbonat, |
| 6,93 Teile | eines ethoxylierten C₁₁-Oxoalkohols (20 %ig) (Genapol UD 110), |
| 340 Teile | n-Butylacrylat, |
| 113 Teile | Methylmethacrylat, |
| 9 Teile | Acetoacetoxyethylmethacrylat, |
| 9 Teile | Methacrylsäure und |
| 0,45 Teile | n-Dodecanthiol sowie |
| 0,26 Teile | t-Butylhydroperoxid (70 %ig) (Trigonox A-W70) in |
| 20 Teilen | vollentsalztem Wasser und |
| 0,18 Teile | Natriumhydroxymethansulfinat (Rongalit C) in |
| 20 Teilen | vollentsalztem Wasser. |

| Physikalische Daten der Dispersion: | |
|---|---|
| Feststoffgehalt | 50,7 % |
| Restmonomerengehalt | <0,01 % Methylmethacrylat, |
| | 0,20 % Butylacrylat |
| Viskosität (386,6 s⁻¹) | 1050 mPa·s |
| Mittlerer Partikeldurchmesser d_{w} | 640 nm |
| Partikelgrößenverteilung d_{w}/dₙ (Aerosolspektroskopie) | 3,24 |

Es wurde eine weiße Dispersionsfarbe für Holzanstriche entsprechend folgendem Rezept angesetzt:

| | |
|---|---|
| 126 Teile | Wasser, |
| 75 Teile | 2 %ige wäßrige Lösung von Methylhydroxyethylcellulose (®Tylose MH 4000 K, Hoechst), |
| 10 Teile | 10 %ige wäßrige Lösung eines Polyphosphats (®Calgon N, BK Ladenburg), |
| 3 Teile | 90 %ige wäßrige Lösung von 2-Amino-2-methyl-1-propanol (AMP 90), |
| 5 Teile | eines ethoxylierten C₁₁-Oxoalkohols (Genapol UD 088), |
| 5 Teile | eines Entschäumers auf Basis von flüssigen Kohlenwasserstoffen, hydrophober Kieselsäure, Fettstoffen, oxalkylierten Verbindungen und nichtionogenen Emulgatoren (Agitan 295), |
| 2 Teile | eines Isothiazolinons als Konservierungsmittel (Mergal K9 N) |
| 200 Teile | Titandioxid (®Kronos 2065, Kronos Titan), |
| 20 Teile | Calciumcarbonat (®Omya Calcidar 2, Omya), |
| 20 Teile | Magnesium-Schichtsilikat (®Micro Talk at 1, Norwegian Talc), |
| 4 Teile | Polyurethanverdicker (®Tafigel PUR 40, Münzing Chemie) in 20 Teilen Wasser, |
| 480 Teile | der oben beschriebenen Dispersion. |

Als Vergleich wurden folgende Emulgator-stabilisierte Reinacrylatdispersionen, die mittels Emulsionszulaufverfahren hergestellt wurden, in dem oben angegebenen Holzfarbenrezept ausgeprüft:

| Vergleichsbeispiel | Monomerzusammensetzung n-Butylacrylat/Methylmethacrylat (BuA/MMA] |
|---|---|
| A | 49:51 |
| B | 60:40 |
| C | 75:25 |

Es wurden jeweils Tack und Reißdehnung der Farbfilme bestimmt.

### 1. Tacktest

Die zu untersuchende Farbe wird mit einem Kastenrakel (Spalthöhe = 200 µm) auf einer 90 x 180 mm großen Glasplatte aufgezogen und im Klimaraum (23 °C, 50 % rel. Luftfeuchte) 24 Stunden gelagert.

Die Probeplatte wird mit der beschichteten Seite auf den Meßtisch des ®Polyken-Probe-Tacktesters gelegt und mit einem Gewicht (1 kg) belastet.

Die Messung wird ausgelöst, der Prüfstempel fährt von unten gegen die Oberfläche und wird nach einer Haltezeit von 10 Sek. mit einer Geschwindigkeit von 10 mm/sec abgezogen. Die dafür benötigte Kraft wird auf einem Zeigerinstrument angezeigt.

### 2. Reißdehnung

Es werden ca. 130 µm dicke Filme hergestellt. Die Reißdehnung wird mittels einer Prüfmaschine der Fa. Zwick in Anlehnung an DIN 53455 bestimmt (Prüffläche 15 mm x 50 mm), wobei eine Zuggeschwindigkeit von 200 mm/min. eingestellt wird.

Folgende Konditionierungen wurden gewählt:

| | |
|---|---|
| I | Tack nach 24 Std. Trocknung bei RT |
| II | Reißdehnung bei RT |
| III | Reißdehnung bei 0°C |
| IV | Reißdehnung bei -10 °C |
| V | Reißdehnung nach 24 Std. Wässerung, gemessen im nassen Zustand bei RT |
| VI | Reißdehnung bei RT nach 3 maligem Zyklus (24 Stunden Wässerung/24 Std. Trocknung bei 50 °C) |

Die Ergebnisse sind in den nachfolgenden Tabellen 4 und 5 zusammengestellt:

**Tabelle 4;**

| Tacktest | | |
|---|---|---|
| Dispersion-Nr. | Monomere BuA/MMA | Tack (g) I |
| Beispiel 3 | 75:25 | 323 |
| Vergleichsbeispiel B | 60:40 | 900 |
| Vergleichsbeispiel C | 75:25 | >2000 |

Der Tack des erfindungsgemäßen Farbfilms liegt in einem akzeptablen Bereich. Der Tack des Vergleichsfarbfilms B ist deutlich höher, trotz wesentlich günstigerer Vorraussetzungen wegen des geringeren Anteils an n-Butylacrylat (BuA/MMA 60:40 im Vergleich zu 75:25). Der Vergleichsfarbfilm C mit dem gleichen Monomerverhältnis wie Beispiel 3 (BuA/MMA 75:25) ist extrem klebrig.

**Tabelle 5;**

| Reißdehnung | | | | | | |
|---|---|---|---|---|---|---|
| Dispersion-Nr. | Monomere BuA/MMA | Reißdehnung (%) | | | | |
| | | II | III | IV | V | VI |
| Beispiel 3 | 75:25 | 303 | 166 | 62 | 485 | 247 |
| Vergleichsbeispiel A | 49:51 | 100 | 9 | 11 | 51 | 33 |
| Vergleichsbeispiel B | 60:40 | 305 | 30 | 39 | 423 | 115 |

Die Tabelle zeigt eine deutlich geringere Reißdehnung von Vergleichsfilm A, insbesondere bei tiefen Temperaturen und nach Wässerung.

Auch Vergleichsfilm B zeigt eine deutliche Abnahme der Reißdehnung bei tiefen Temperaturen und nach mehrfacher Wässerung.

Das erfindungsgemäße Produkt eignet sich somit zur Herstellung von elastischen Holzfarben wesentlich besser als die Vergleichsbeispiele A, B und C, da es sowohl eine geringere Klebrigkeit als auch gute Reißdehnung (Rißüberbrückung) im Neuzustand (ungewässert) und nach Wassereinwirkung (Simulation einer Belastung durch Regen) aufweist.

## Patentansprüche

1. Verfahren zur Herstellung von Schutzkolloid-stabilisierten wäßrigen Kunststoffdispersionen auf Basis von Copolymerisaten aus
a) der Gruppe der Ester der Acrylsäure mit einem 1 bis 22 Kohlenstoffatome aufweisenden Alkohol und der Ester der Methacrylsäure mit einem 1 bis 22 Kohlenstoffatome aufweisenden Alkohol
und gegebenenfalls
b) weiteren mit den vorgenannten Komponenten copolymerisierbaren Monomeren,
dadurch gekennzeichnet, daß mindestens 50 Gew.-% der Gesamtmenge der Monomeren und des Schutzkolloids und bis zu 50 Gew.-% der Gesamtmenge des Initiators in Form einer wäßrigen Emulsion vorgelegt werden und mindestens 50 Gew.-% des Initiators und gegebenenfalls die Restmenge der Monomeren und des Schutzkolloids bei einer Reaktionstemperatur von 30 bis 100 °C zugesetzt werden.

2. Verfahren zur Herstellung von Schutzkolloid-stabilisierten wäßrigen Kunststoffdispersionen, dadurch gekennzeichnet, daß als Comonomere zu mehr als 50 Gew.-% Monomere aus der Gruppe Ester der Acrylsäure mit einem 1 bis 12 Kohlenstoffatome aufweisenden Alkohol, Ester der Methacrylsäure mit einem 1 bis 12 Kohlenstoffatome aufweisenden Alkohol und Styrol eingesetzt werden.

3. Verfahren nach Anspruch 1, dadurch gekennzeichnet, daß als Schutzkolloid Polyvinylalkohol in Mengen von 4 bis 15 Gew.-%, bezogen auf die Monomeren, eingesetzt wird.

4. Verfahren nach Anspruch 1, dadurch gekennzeichnet, daß mindestens 80 Gew.-% der Gesamtmenge der Monomeren und des Schutzkolloids vorgelegt und mindestens 80 Gew.-% des Initiators bei einer Reaktionstemperatur von 40 bis 90 °C zugesetzt werden.

5. Verfahren nach Anspruch 1, dadurch gekennzeichnet, daß die Gesamtmenge der Monomeren und des Schutzkolloids vorgelegt wird und die Gesamtmenge des Initiators bei einer Reaktionstemperatur von 40 bis 90 °C zugesetzt wird.

6. Verfahren nach Anspruch 1, dadurch gekennzeichnet, daß die Gesamtmenge der Monomeren und des Schutzkolloids zusammen mit 5 bis 20 Gew.-% der Gesamtmenge des Initiators vorgelegt wird und die Polymerisation bei einer Temperatur von 50 °C bis 60 °C gestartet wird und anschließend bei einer Temperatur von 80 bis 90 °C die restliche Initiatormenge so zudosiert wird, daß die Temperatur von 80 °C bis 90 °C bis zum Ende der Polymerisation aufrechterhalten wird.

7. Verfahren nach Anspruch 1, dadurch gekennzeichnet, daß bei der Polymerisation entstehende Reaktionswärme durch Verdampfungskühlung abgeführt wird, indem ein Wasser-/Monomer-Gemisch gegebenenfalls unter reduziertem Druck abdestilliert, kondensiert und in den Reaktionsansatz zurückgeführt wird.

8. Schutzkolloid-stabilisierte wäßrige Kunststoffdispersionen, herstellbar nach dem Verfahren gemäß Anspruch 1, mit einer Glasübergangstemperatur von mindestens -50 °C und einer Mindestfilmbildungstemperatur von bis zu 60 °C.

9. Verwendung der nach dem Verfahren gemäß Anspruch 1 hergestellten Schutzkolloid-stabilisierten wäßrigen Kunstharzdispersionen als Bindemittel in umweltfreundlichen Holzschutzfarben.

10. Verwendung der nach dem Verfahren gemäß Anspruch 1 hergestellten Schutzkolloid-stabilisierten wäßrigen Kunstharzdispersionen zur Herstellung redispergierbarer Kunststoffpulver.

## Claims

1. A process for the preparation of an aqueous plastics dispersion stabilized by a protective colloid and based on a copolymer of
a) the group of esters of acrylic acid with an alcohol containing 1 to 22 carbon atoms and esters of methacrylic acid with an alcohol containing 1 to 22 carbon atoms
and if appropriate
b) further monomers which can be copolymerized with the abovementioned components,
which comprises initially introducing into the reaction vessel at least 50% by weight of the total amount of monomers and protective colloid and up to 50% by weight of the total amount of initiator in the form of an aqueous emulsion and adding at least 50% by weight of the initiator and if appropriate the remaining amount of the monomers and protective colloid at a reaction temperature of 30 to 100°C.

2. A process for the preparation of an aqueous plastics dispersion stabilized by a protective colloid, wherein monomers from the group consisting of esters of acrylic acid with an alcohol containing 1 to 12 carbon atoms, esters of methacrylic acid with an alcohol containing 1 to 12 carbon atoms and styrene are employed to the extent of more than 50% by weight as comonomers.

3. The process as claimed in claim 1, wherein polyvinyl alcohol is employed as the protective colloid in amounts of 4 to 15% by weight, based on the monomers.

4. The process as claimed in claim 1, wherein at least 80% by weight of the total amount of monomers and protective colloid is initially introduced into the reaction vessel and at least 80% by weight of the initiator is added at a reaction temperature of 40 to 90°C.

5. The process as claimed in claim 1, wherein the total amount of monomers and protective colloid is initially introduced into the reaction vessel and the total amount of initiator is added at a reaction temperature of 40 to 90°C.

6. The process as claimed in claim 1, wherein the total amount of monomers and protective colloid together with 5 to 20% by weight of the total amount of initiator is initially introduced into the reaction vessel, the polymerization is started at a temperature of 50°C to 60°C and the remaining amount of initiator is then metered in at a temperature of 80 to 90°C such that the temperature of 80°C to 90°C is maintained until the end of the polymerization.

7. The process as claimed in claim 1, wherein heat of reaction formed during the polymerization is removed by evaporative cooling by a procedure in which a water/monomer mixture is distilled off, if appropriate under reduced pressure, condensed and recycled to the reaction batch.

8. An aqueous plastics dispersion stabilized by a protective colloid and preparable by the process as claimed in claim 1, having a glass transition temperature of at least -50°C and a minimum film formation temperature of up to 60°C.

9. The use of an aqueous synthetic resin dispersion stabilized by a protective colloid and prepared by the process as claimed in claim 1 as a binder in environment-friendly wood preservative paints.

10. The use of an aqueous synthetic resin dispersion stabilized by a protective colloid and prepared by the process as claimed in claim 1 for the preparation of a redispersible plastics powder.

## Revendications

1. Procédé de préparation de dispersions aqueuses de matières plastiques stabilisées par des colloïdes protecteurs sur la base de copolymères pris
a) dans le groupe d'esters d'acide acrylique avec un alcool présentant de 1 à 22 atomes de carbone et d'esters d'acide méthacrylique avec un alcool présentant de 1 à 22 atomes de carbone,
et éventuellement
b) d'autres monomères copolymérisables avec les composants précités,
caractérisé en ce que l'on introduit en premier lieu au moins 50 % en poids de la quantité totale des monomères et du colloïde protecteur et jusqu'à 50 % en poids de la quantité totale de l'amorceur sous forme d'une émulsion aqueuse et on ajoute au moins 50 % en poids de l'amorceur et éventuellement la quantité restante des monomères et du colloïde protecteur, à une température réactionnelle de 30 à 100 °C.

2. Procédé de préparation de dispersions aqueuses de matières plastiques stabilisées par des colloïdes protecteurs, caractérisé en ce que l'on utilise comme comonomères plus de 50 % en poids de monomères du groupe constitué d'esters d'acide acrylique avec un alcool présentant de 1 à 12 atomes de carbone, ainsi que d'esters d'acide méthacrylique avec un alcool présentant de 1 à 12 atomes de carbone et du styrène.

3. Procédé selon la revendication 1, caractérisé en ce que l'on utilise comme colloïde protecteur du poly(alcool vinylique) dans une quantité de 4 à 15 % en poids, par rapport aux monomères.

4. Procédé selon la revendication 1, caractérisé en ce que l'on introduit en premier lieu au moins 80 % en poids de la quantité totale des monomères et du colloïde protecteur et on ajoute au moins 80 % en poids de l'amorceur, à une température réactionnelle de 40 à 90 °C.

5. Procédé selon la revendication 1, caractérisé en ce que l'on introduit en premier lieu la quantité totale des monomères et du colloïde protecteur et la quantité totale de l'amorceur, à une température réactionnelle de 40 à 90 °C.

6. Procédé selon la revendication 1, caractérisé en ce que l'on introduit en premier lieu la quantité totale des monomères et du colloïde protecteur conjointement avec de 5 à 20 % en poids de la quantité totale de l'amorceur et que l'on déclenche la polymérisation à une température de 50 à 60 °C et ensuite, à une température de 80 à 90 °C, on ajoute progressivement la quantité restante d'amorceur de façon telle qu'on maintienne la température de 80 à 90 °C jusqu'à la fin de la polymérisation.

7. Procédé selon la revendication 1, caractérisé en ce que l'on évacue la chaleur réactionnelle dégagée au moyen d'un refroidissement par évaporation, en distillant un mélange eau/monomère, éventuellement sous pression réduite, on condense et on recycle dans la charge réactionnelle.

8. Dispersions aqueuses de matières plastiques stabilisées par des colloïdes protecteurs, que l'on peut préparer selon le procédé de la revendication 1, ayant une température de transition vitreuse d'au moins -50 °C et une température filmogène minimale de 60°C.

9. Utilisation des dispersions aqueuses de matières plastiques stabilisées par des colloïdes protecteurs, préparées selon la revendication 1 comme liants dans des peintures biodégradables de protection de bois.

10. Utilisation des dispersions aqueuses de matières plastiques stabilisées par des colloïdes protecteurs que l'on peut préparer selon la revendication 1 pour la préparation de poudres redispersables de matières plastiques.
